# EUROPEAN PATENT APPLICATION

(11) **EP 1 780 948 A2**
(43) Date of publication of application: **02.05.2007**
(21) Application number: 06122636.1
(22) Date of filing: 20.10.2006
(51) Int. Cl.: H04L 12/26, H04Q 7/34

(54) **Correlating signalling and bearer circuits in a mobile communications network**

(30) Priority: 28.10.2005 GB 0522020
(71) Applicant: Agilent Technologies, Inc., Santa Clara, CA 95051 (US)
(72) Inventor: Renfrew, Craig, South Queensferry, Lothian EH30 9TG (GB); Lightfoot, Derek, South Queensferry, Lothian EH30 9TG (GB)
(74) Representative: Coker, David Graeme

(57) **Abstract**

Identifications of signalling and bearer circuits carrying signalling information and communications traffic (e.g. voice calls) for the same communication are correlated by recognising a predetermined pattern in the communications traffic signals, and identifying signalling messages by reference to information contained in the messages relating to time of occurrence of the related communications traffic.

## Description

This invention relates to methods and apparatus for correlating signalling and bearer circuits in a mobile communications network, for example in GSM (2/2.5G) or UMTS (3G) mobile networks.

### Background Art

In GSM (2G) mobile communications networks, including those using CDMA coding, communications to and from a mobile station (MS, such as a mobile phone) are handled by a Base Transceiver Station (BTS), the operation of which is coordinated by a Base Station Controller (BSC). Multiple BSCs are connected to a Mobile Switching Centre (MSC) for switching of communications among mobiles and between mobiles and the terrestrial Public Switched Telephone Network (PSTN). 3G networks have an analogous architecture, involving the use of Node B's (counterparts of GSM BTSs) and Radio Network Controllers (RNCs, counterparts of BSCs).

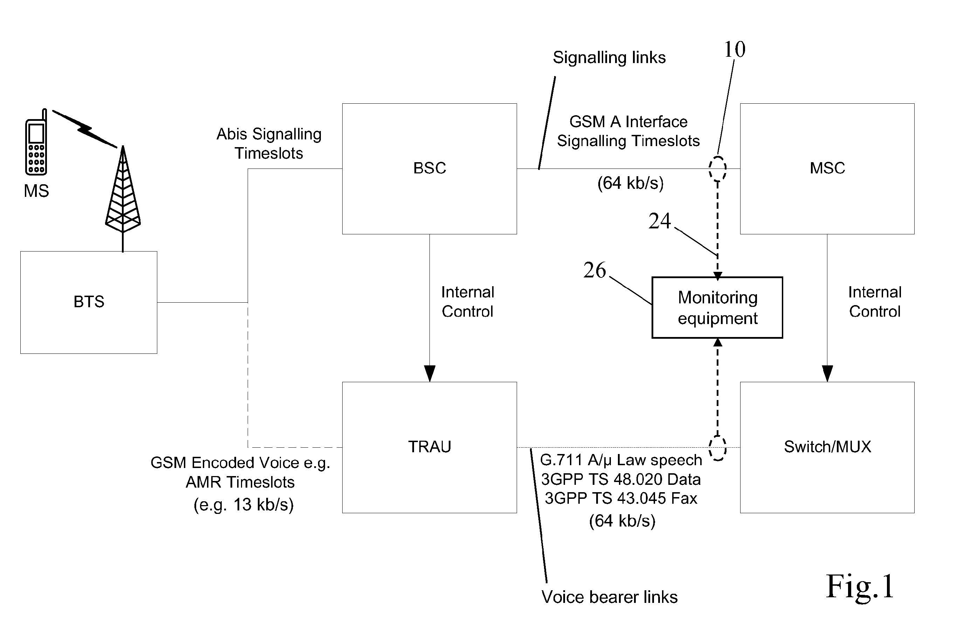

Communications between a MS and a BTS are carried as wireless signals over the air interface; those between a BTS and its BSC are carried over "A-bis" links (typically electrical or optical communications links), and those between a BSC and an MSC are carried over "A" links (see Figure 1). The A-bis and A links are implemented as time multiplexed channels on the physical links, and a typical BSC-MSC connection, for example, will incorporate multiple A links to handle the volume of communications traffic involved. This traffic includes both signalling messages (for controlling and coordination operation of the network) and "bearers" which bear or carry user communications (e.g. digitised voice signals, fax signals or digital data). A voice call for example will typically involve a pair of bearers, one carrying voice signals in the direction towards the MS, and the other carrying voice signals from the MS. The bearers involved in a call may or may not be carried over the same A link as the signalling messages which set up and coordinate operation of the network to support that call.

In GSM systems the MS encodes voice using any of a number of different coder/decoder algorithms (codecs), for example Adaptive Multi-Rate (AMR). A Transcoding and Rate Adaptation Unit (TRAU) converts the signals encoded according to the codec in use by the MS to either A-law or µ-law 64 kb/s voice encoding (as defined in ITU-T Recommendation G.711) for transmission over the A interface. Although the relevant standards allow the TRAU to be located at the BTS, locating it at the MSC reduces transmission costs between the BSC and MSC (in this instance the A interface link is known as an Ater link). The GSM signalling that is related to the voice bearers is carried in a 56 kb/s or 64 kb/s timeslot.

A Circuit Identity Code (CIC) is used in the signalling between the MSC and BSC to identify the DS-0 timeslot used to carry the voice signal. The CIC field is structured differently depending on the network type (GSM or CDMA) and on the bearer type (E1 or T1). On the GSM A interface the 16 bit CIC (defined in 3GPP specification TS 48.008) uses five bits to define the DS-0 timeslot within an E 1 link. The remaining eleven bits are used to define the 'multiplex' i.e. the actual E1 pulse code modulated (PCM) link to use. For the case where T1 bearers are used in a GSM network, the 16 bit CIC is byte-swapped in the signalling and does not have an explicit structure defined. On a CDMA A interface the CIC (3GPP2 Specification A.S0014-0, section 4.2.19) has the same form as the GSM E1 CIC on both E1 and T1 links. The CIC to be used during a voice call can be allocated either by the BSC or the MSC.

For purposes such as monitoring and measuring voice quality of mobile calls it is advantageous to be able to correlate the CIC used in signalling messages with the E1/T1 link number(s) identifying the A link(s) carrying the voice bearers coordinated by those signalling messages.

### Disclosure of Invention

According to one aspect of this invention there is provided a method of correlating circuit identifications of a signalling circuit and a bearer circuit in a mobile communications network, comprising the steps of:
monitoring a signalling link and detecting signalling messages relating to communications carried on a bearer circuit;
monitoring a bearer circuit and detecting bearer timeslots containing communications traffic;
identifying occurrence of a predetermined pattern in communications traffic on the bearer circuit, and extracting the bearer circuit identification for traffic exhibiting that pattern;
identifying signalling messages by reference to information contained in the messages relating to time of occurrence of related communications traffic on the bearer circuit, and extracting the signalling circuit identification contained in the identified messages; and
correlating the extracted signalling circuit and bearer circuit identifications.

According to another aspect of this invention there is provided apparatus for correlating circuit identifications of a signalling circuit and a bearer circuit in a mobile communications network, comprising:
a monitor for monitoring a signalling link and detecting signalling messages relating to communications carried on a bearer circuit, and for monitoring a bearer circuit and detecting bearer timeslots containing communications traffic;
an identifier for identifying occurrence of a predetermined pattern in communications traffic on the bearer circuit, and extracting the bearer circuit identification for traffic exhibiting that pattern, and for identifying signalling messages by reference to information contained in the messages relating to time of occurrence of related communications traffic on the bearer circuit, and extracting the signalling circuit identification contained in the identified messages; and
a correlator for correlating the extracted signalling circuit and bearer circuit identifications.

According to a further aspect of the invention there is provided a method of discovering direction of communications traffic on a bearer circuit, comprising detecting signalling messages relating to the communications traffic and deducing the direction of the communications traffic by analysis of the signalling messages.

According to a further aspect of the invention there is provided a method of discovering direction of communications traffic on a bearer circuit, comprising detecting and analysing communications signals on the bearer circuit that are indicative of occurrence of ringing signals.

### Brief Description of Drawings

A method and apparatus in accordance with this invention, for correlating signalling and bearer circuits in a mobile communications network, will now be described, by way of example, with reference to the accompanying drawings, in which:
- Figure 1: is a schematic representation of major components of a GSM mobile communications network;
- Figure 2: shows a call model of the sequence of signalling messages involved in establishing and clearing a mobile-originated voice call in a GSM system;
- Figure 3: shows a call model of the sequence of signalling messages involved in establishing and clearing a mobile-terminated voice call in a GSM system;
- Figure 4: shows a sequence of signalling messages analogous to Figure 2 but for a CDMA 2G system;
- Figure 5: shows a sequence of signalling messages analogous to Figure 3 but for a CDMA 2G system;
- Figure 6: is a schematic block diagram of a monitoring system for monitoring signalling links in the network of Figure 1;
- Figure 7: is a diagram of a state machine for voice circuit call discovery; and
- Figure 8: illustrates timing aspects of ring tone patterns.

### Detailed Description

The invention provides a mechanism for automatically learning the relationship between a voice circuit CIC found in, for example, GSM A interface signalling messages and a pair of voice timeslots that are used to carry voice signals, encoded with A-law or µ-law encoding, on E1 and T1 PCM links in the A interface. As an MSC may have several thousand voice circuits, learning the exact mapping for each individual CIC would be time consuming, especially for the case where certain circuits are rarely used. However, the CIC consists of a 'multiplex' component that identifies the PCM link (11 most significant bits) and a DS-0 number (5 least significant bits), for the case of an E1 bearer. The exemplary embodiment described below learns the relationship between the CIC multiplex (i.e. the E1/T1 circuit identifier) and the E1/T1 link number. For this approach to work it imposes the constraint that all the DS-0s from an E1/T1 must be visible. In other words, individual DS-0s presented through an add/drop type multiplexor are not allowed.

When learning is complete the CIC multiplex should map to two E1/T1 link numbers (for carrying voice to and from the BSC).

In GSM systems the CIC (described in section 3.2.2.2 of 3GPP specification TS 48.008) is defined to be byte-swapped on T1 links. For the purposes of the embodiment described below it is assumed that once the byte swapping is reversed it has the same internal structure of multiplex and timeslot structure as the E1 form (11 bits multiplex and 5 bits timeslot), or that the PCM number can be derived from the CIC by subtracting one and dividing by 24 and the timeslot (DS-0) is (CIC number minus one) modulo 24 then add one. In addition, different rules may be needed to map from a CIC to the PCM and DS-0 depending on how the mapping is structured.

The embodiment to be described works by searching for the beginning and end of calls within voice timeslots. The start and end times are then used to match against calls tracked by the signalling messages. It is possible to perform the match using just call start times, but this is envisaged to be more error prone than when using the length of the call too. The matching can be further strengthened if desired by eliminating short duration calls, noting that around 60% of voice calls last less than one minute.

Detecting voice transitions presents challenges that need to be considered. First it is desirable to find a timeslot that is in a state where an idle code is being transmitted (indicating that the voice circuit in question is not involved in an active call). Voice circuits in active use will contain the A-law or µ-law encoded voice as per ITU Recommendation G.711. This octet stream can potentially also contain an idle code representing a valid voice sample (at a low or zero signal level). So the basic approach is:
1. Search for a timeslot that contains at least a minimum number of valid idle codes.
2. Wait for a call to start.
3. Monitor the call until completion.
4. Match against call start and end time based on BSSMAP (Base Station Subsystem Management Part) and DTAP (Direct Transfer Application Part) signalling.
5. If found, associate CIC multiplex code with voice E1/T1 link identifier

There are two factors that need to be taken into account when using the call length as observed on the voice timeslot with the signalling. First the idle codes used on E1 and T1 are at or close to the zero level value. This means that pauses in a voice conversation may generate idle codes. This is dealt with by ignoring sequences of idle codes that are shorter in duration than a configurable limit.

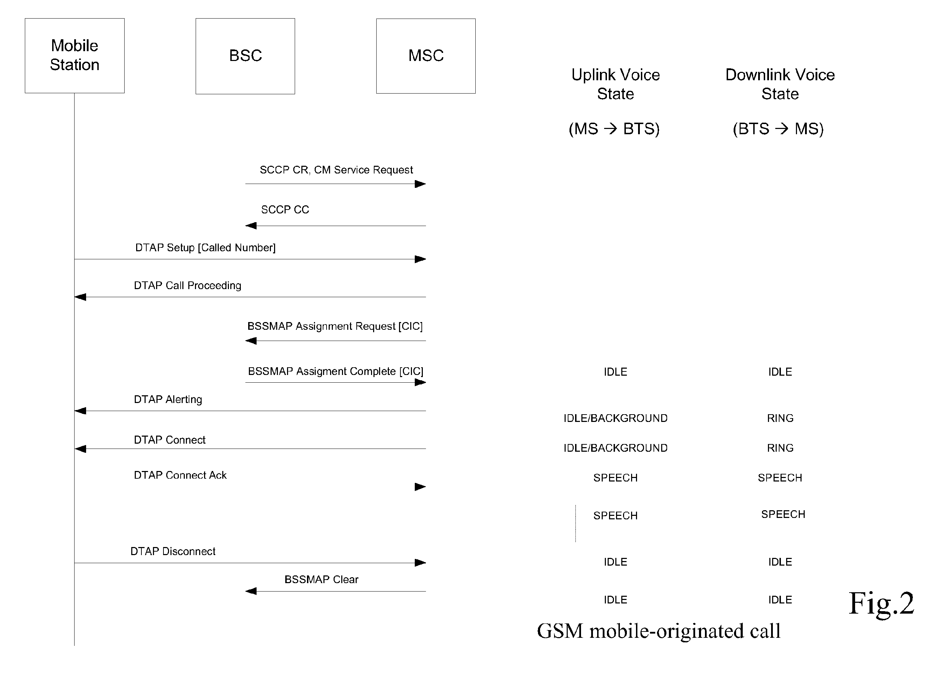

The second factor is that the 'start' of a call differs in the mobile originating and mobile terminating cases. When a GSM subscriber begins a mobile originated call (Figure 2), a voice circuit is assigned immediately in order to transmit the ringing tone that is sent by the terminating switch (MSC or PSTN switch) to the handset on the downlink timeslot. The uplink timeslot is effectively 'open' in that if the user speaks during this time the sound will be transmitted on the A-interface. Therefore in the uplink direction the transmitted value is nominally silence but may include incidental sound from the MS.

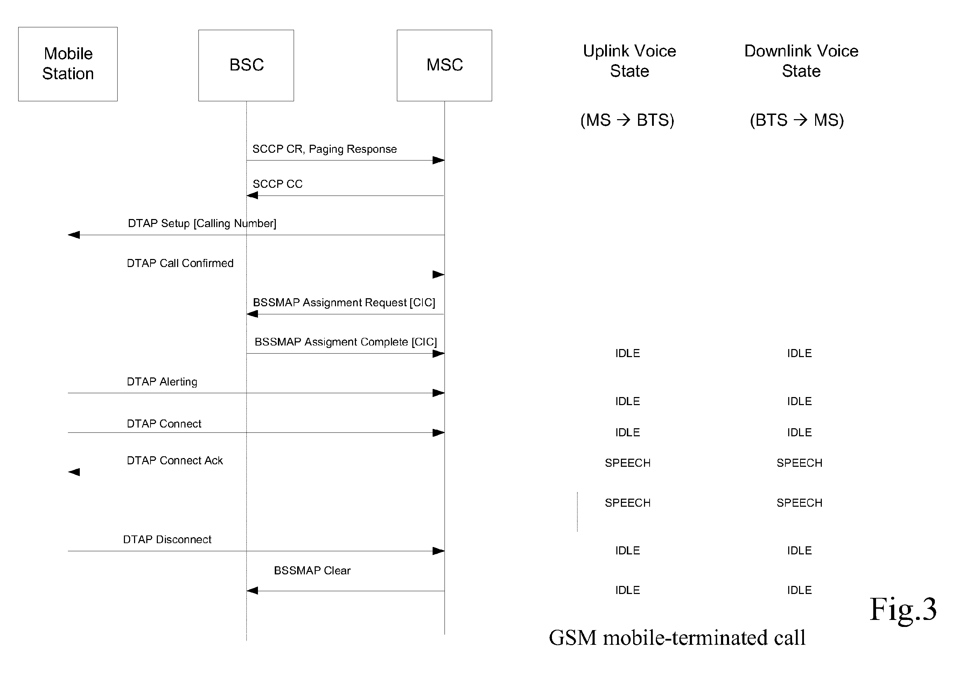

For the mobile terminated case (Figure 3), the uplink and downlink voice circuits will be allocated when the Assignment Request/Complete is observed. However, until the mobile station answers the call the A-interface voice circuit will be silent in the direction towards the network and (may) be silent towards the MS too, if the ringing is generated at the local MSC. This being the case, the Assignment Request/Complete is a sub-optimal choice for the voice start time, and the DTAP Connect Acknowledge is used in the embodiment described below to denote the start of voice activity in the call.

In GSM systems the DTAP Disconnect message denotes the end of the call transaction. This is either sent by the MS to initiate the call clearing or sent by the network to indicate that the call has been cleared by the remote subscriber. For calls that are handed to a new SCCP (Signalling Connection Control Part) connection (typically on a different BSC), no DTAP Disconnect will be observed. In this case the BSSMAP Clear is taken to denote the end of the call as it denotes clearing of the voice circuit on that A-interface.

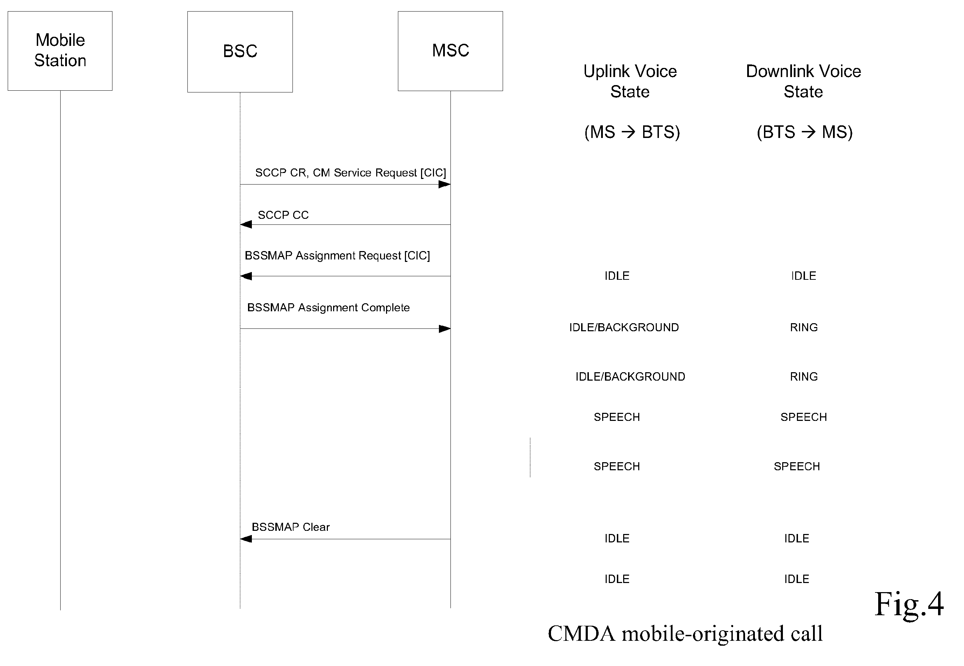

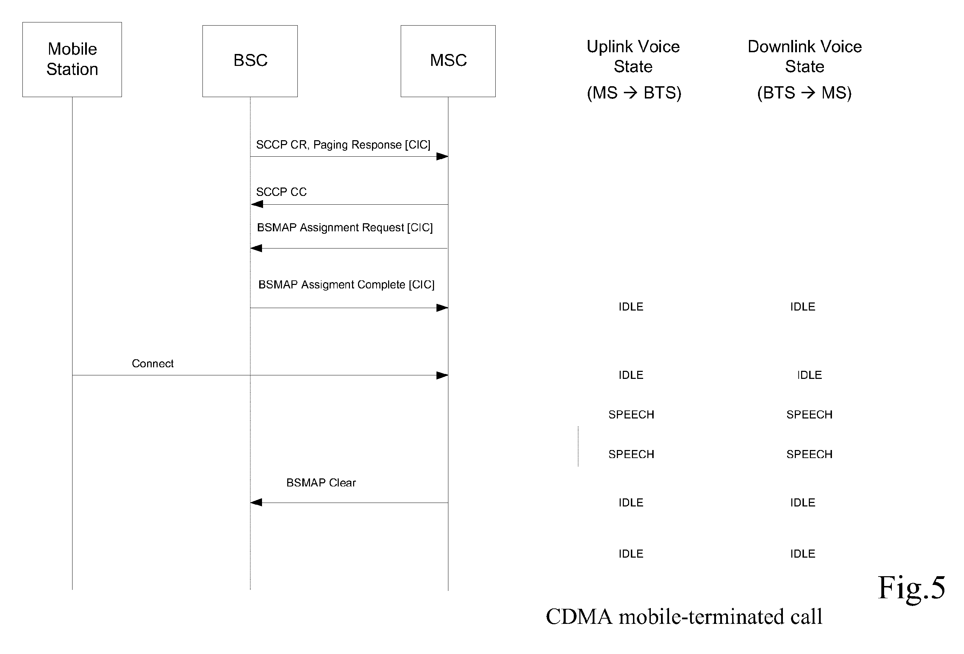

Figures 4 and 5 show the equivalent call models for CDMA systems. Figures 2 to 5 show voice circuits transitioning to and from idle code mode at the same time as specific BSSMAP and DTAP signalling messages (or their CDMA equivalents). However these are only approximately associated in time as there may be latency involved in the MSC signalling the voice switching equipment.

The direction of a voice bearer needs to be discovered in order to associate correctly the speaker with the MS identity. Voice circuits that also carry a signalling timeslot are easily assigned a direction by checking for signalling messages which appear in a single direction. For those E1s or T1s that carry only voice timeslots then direction is harder to determine automatically. The options described below are manual configuration and detection of the ring sequence on the downlink.

The invention entails the collection of data to derive the desired correlation between signalling CIC and voice timeslots by monitoring signals on the A (or other) links of the mobile communications network.

Referring again to Figure 1, the monitoring system includes probes 10 for passively monitoring signalling messages traversing the A links, as described below. The monitoring is passive in the sense that the operation of the links is undisturbed by the presence of the monitoring system, which simply makes copies of some or all of the message packets (signalling and/or voice) it observes traversing the links. The probes 10 are coupled to the links in such a way that the operating characteristics of the links are not significantly altered. In the case of an optical link, for example, the coupling may comprise an optical power splitter and for an electrical link it may be a bridging isolator.

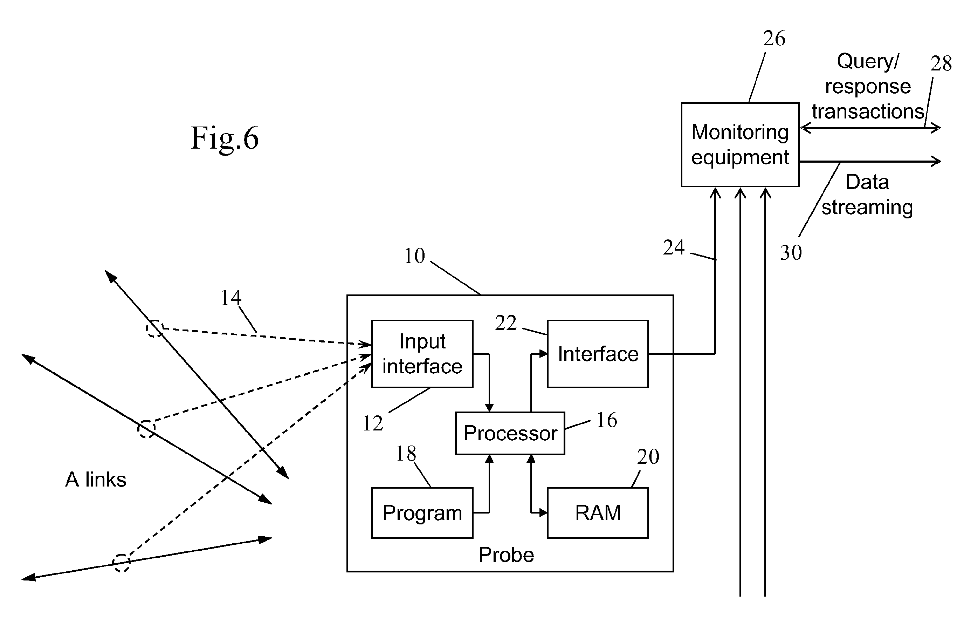

As shown in Figure 6, each probe 10 has an input interface 12 which receives and conditions the signal received over a line 14 from the coupling to the relevant link and which supplies the signal to a processor/CPU 16 operating under the control of software program instructions in a program store 18 and using a random access store 20. The processor 16 extracts messages from the signal and performs some initial processing (e.g. error checking and preliminary decoding). The messages are subsequently forwarded via an interface 22 and a communications bus 24 to monitoring equipment 26 for any necessary additional decoding and for further analysis as described below. This monitoring equipment has a processor, program store and random access store as described above for the probes 10, and provides responses to specific queries on current or historic measurement data via a input/output port 28, and a real-time measurement data stream relating to active mobile stations on an output port 30. The probes 10 may comprise for example components of acceSS7 system equipment available from Agilent Technologies for monitoring messages traversing SS7 signalling networks.

The analysis described below to correlate CIC values with voice timeslots begins by identifying the set of E1 or T1 bearers that carry voice, before proceeding to associate CIC values with bearers. This has a number of advantages. First of all, once the set of voice bearers is discovered, these can be searched directly rather than scanning the full E1/T1 space in all bearers. Second, having a list of voice bearers will aid troubleshooting in cases where too many or too few voice bearers are detected by a probe 10. For example, on E1 links the 16-bit CIC value contains an 11-bit multiplex (PCM) identifier and a 5-bit timeslot number. By counting the number of different PCM identifiers it should be possible to determine if too many or too few voice bearers are present. Third, the discovery of voice bearers provides a chance to discover the idle code in use on a bearer.

The analysis as described below can be implemented for example by use of various tables or similar data structures. The data items that are stored in these data structures are in the exemplary embodiment of the invention as follows:

**Voice Bearer (VB) Table**

| Name | Size | Description |
|---|---|---|
| E1T1_LINK_NUMBER | Unsigned 64 bits | Global identifier of the E1/T1 link. |
| IDLECODE | Unsigned 16 bits | Idle code in use on the bearer |
| CONFIDENCE | Unsigned 16 bits | 1..VQ_MAX_BEARER_CONF |
| TIMEOUT | Unsigned 16 bits | 1..VQ_MAX_BEARER_TIMEOUT |

Fast access to the VB table is required on the E1T1_LINK_NUMBER field. This is a persistent table.

**CICMultiplex Mapping Table**

| Name | Size | Description |
|---|---|---|
| CIC_MULTIPLEX | Unsigned 16 bits | On E1 bearers: the most significant 11 bits from the CIC used for voice calls. |
| | | On T1 bearers: the CIC is a 16-bit value without a defined component indicating the multiplex (PCM number) and timeslot number. The PCM number is extracted by dividing by 24, or from the top 11 bits (as with E1). Note that the 16-bit CIC is byte-swapped on T1 links. |
| BSC_POINTCODE | Unsigned 32 bits | Qualifies the E1/T1 multiplex value in the CIC. |
| E1T1_LINK_NUMBER | Unsigned 64 bits | Global identifier of the E1/T1 link. |
| CONFIDENCE | Unsigned 16 bits | 1..VQ_MAX_VOICE_CONF |
| TIMEOUT | Unsigned 16 bits | 1..VQ_MAX_VOICE_TIMEOUT |

Fast table indexing is required, using:
- BSC_POINTCODE and CIC_MULTIPLEX;
- E1T1_LINK_NUMBER.
The CICMultiplex Mapping table must support multiple entries with the same BSC_POINTCODE and CIC_MULTIPLEX value. This is a persistent table. This table provides the desired correlation of CIC multiplex code (CIC_MULTIPLEX) with voice bearer (E1T1_LINK_NUMBER).

**Call Connection (CC) Table**

| Name | Size | Description |
|---|---|---|
| BSC_PC | Unsigned 32 bits | |
| BSC_LOCALREF | Unsigned 32 bits | |
| MSC_PC | Unsigned 32 bits | |
| MSC_LOCALREF | Unsigned 32 bits | |
| CONNECT_TIME | Unsigned 32 bits | Time of CONNECT ACK, HANDOVER REQUEST or HANDOVER REQUEST ACK where the message contains a CIC. Indicates the approximate time at which voice activity begins on a call. |
| CLEAR_TIME | Unsigned 32 bits | Timestamp from the DISCONNECT or, if missed, the BSSMAP CLEAR event. Approximate time that the voice circuit is deactivated. |
| CIC_MULTIPLEX | Unsigned 16 bits | Most significant 11 bits from the CIC (on E1). |
| CIC_TIMESLOT | Unsigned 8 bits | Least significant 5 bits from the CIC (on E1). |

Fast access to the CC table is required on the fields:
- BSC_PC, BSC_LOCALREF and MSC_PC
- BSC_PC, MSC_LOCALREF and MSC_PC.
This is not a persistent table.

**Voice Timeslot (VT) Table**

| Name | Size | Description |
|---|---|---|
| VOICE_START_TIME | Unsigned 32 bits | |
| VOICE_END_TIME | Unsigned 32 bits | |
| TIMESLOT | Unsigned 64 bits | Global timeslot number. Includes the card number, port number, E1 or T1 number and DS-0 timeslot number and speed. |

This is not a persistent table.

**Active Ring Call Table**

| Name | Size | Description |
|---|---|---|
| BSC_PC | Unsigned 32 bits | |
| BSC_LOCALREF | Unsigned 32 bits | |
| MSC_PC | Unsigned 32 bits | |
| MSC_LOCALREF | Unsigned 32 bits | |
| TIMESLOT1 | Unsigned 64 bits | Timeslot identifier for one of the voice bearers. |
| TIMESLOT2 | Unsigned 64 bits | Timeslot identifier for the second voice bearer if present. |
| BUFFER1 | Octet array | Stores raw voice stream for TIMESLOT1. 15 seconds of speech needs 15*8000 octets. |
| BUFFER2 | Octet array | Stores raw voice stream for TIMESLOT2. |

This table must be searchable by:
- BSC_PC, MSC_PC, BSC_LOCALREF
- BSC_PC, MSC_PC, MSC_LOCALREF
- TIMESLOT1
- TIMESLOT2.
This is not a persistent table.

**Discovered Direction Table**

| Name | Size | Description |
|---|---|---|
| E1T1_LINK_NUMBER | Unsigned 64 bits | |
| DIRECTION | enum | One of TO_MS, FROM_MS |
| CONFIDENCE | Unsigned 16 bits | 1..VQ_DIRECTION_MAX_CONF |
| TIMEOUT | Unsigned 32 bits | 1..VQ_DIRECTION_TIMEOUT |

This table contains the direction of links that are discovered either using signalling information or by the ring tone detection procedure described below. Fast table indexing is required, using E1T1_LINK_NUMBER. This is not a persistent table.

**Direction Table**

| Name | Size | Description |
|---|---|---|
| E1T1_LINK_NUMBER | Unsigned 64 bits | |
| DIRECTION | enum | One of TO_MS, FROM_MS |
| TIMEOUT | Unsigned 32 bits | 1..VQ_DIRECTION_TIMEOUT |

This is the primary direction table that is used to provide direction information for E1/T1 bearers. In effect this is a cache table and each entry is derived from searching the Discovered Direction Table, the Bearer Hints Table and the E1T1 Hints Table. Once an entry is added to this table it is timed out over a period of time in order to cause the cache to be refreshed with any new (or corrected) direction information that is discovered. Making this table persistent enables direction information to be provided immediately after software restart.
Fast table indexing is required, using E1T1_LINK_NUMBER. This is a persistent table.

**Bearer Hints Table**

| Name | Size | Description |
|---|---|---|
| CARD | Unsigned 16 bits | |
| BEARER | Unsigned 16 bits | |
| DIRECTION | enum | One of TO_MS, FROM_MS or UNKNOWN |

This table is populated by a configuration resource (e.g. user configuration) and indicates the direction of a card bearer. If the direction is marked as unknown, it is assumed that all the E1/T1s in that bearer have the same direction but it is currently unknown.

**E1T1 Hints Table**

| Name | Size | Description |
|---|---|---|
| CARD | Unsigned 16 bits | |
| BEARER | Unsigned 16 bits | |
| E1T1_NUMBER_MIN | Unsigned 64 bits | Standard E1/T1 identifier. Lower number in E1/T1 range. |
| E 1T1_NUMBER_MAX | Unsigned 64 bits | Standard E1/T1 identifier. Upper number in E1/T1 range (inclusive). It equals E1T1_NUMBER_MIN in order to indicate a single E1/T1. |
| DIRECTION | enum | One of TO_MS, FROM_MS or UNKNOWN. |

Analogous to the Bearer Hints Table, but specifies direction at the E1/T1 level. It is manually configured from a resource file and supports E1/T1 number ranges. This table takes precedence over the Bearer Hints Table.

The analysis also references various thresholds and other values that can be configured by the user, as follows:

| Name | Typical value | Description |
|---|---|---|
| VQ_MIN_WAIT_TIME | 1 second | Minimum number of octets containing the idle code that must be observed before a transition to voice (i.e. non idle) is accepted. Avoids accepting short runs of idle codes in data streams as valid voice timeslots. |
| VQ_MAX_WAIT_TIME | 120 seconds | Maximum number of octets to wait in a voice stream for a call to begin. |
| VQ_SEARCH_BATCH | 10 | The number of timeslots enabled at one time for voice bearer discovery. Set to zero to prevent voice bearer discovery running. |
| VQ_MAX_CALL_HOLD_TIME | 600 seconds | The maximum amount of time to wait for an active call to end. |
| VQ_IDLE_POSTAMBLE | 80000 octets (10 seconds) | This is the minimum number of idle code octets that must be observed to allow a call to be marked as ended. Sequences of idle may occasionally occur in a call denoting silence or low background noise. |
| VQ_MIN_CALL_HOLD_TIME | 45 seconds | This is the shortest call length that is presented for matching. As there are relatively fewer longer calls this reduces the possibility of a false match when matching the call duration as seen in the signalling with the call duration observed in the voice timeslot. |
| VQ_START_GUARD_TIME | 10000 ms | This is the maximum time difference between the assignment of a CIC seen in the BSSMAP signalling and the start of a call seen in the voice timeslot. |
| VQ_END_GUARD | 2000 ms | This is the maximum difference between the clearing of a CIC seen in the BSSMAP signalling (ie a CLEAR Command) and the end of a call seen in the voice timeslot. |
| VQ_MAX_VOICE_TIMEOUT | 24 | The initial timeout value for entries in the structured and unstructured timeslot tables. Value reduced by one every LCS_VOICE_CICTABLETICK (default 3600) seconds. |
| VQ_CC_TABLE_SCAN_PERIOD | 1 hour | |
| VQ_CC_TABLE_THRESHOLD_TIME | 10 minutes | |
| VQ_TABLE_SCAN_PERIOD | 1 hour | |
| VQ_VOICE_DISCOVERY_PERIOD | 5 seconds | The number of seconds a timeslot is enabled for voice bearer discovery. |
| VQ_BEARER_DS0_COUNT | 10 | |
| VQ_BEARER_IDLE_SECONDS | 4 seconds | |
| VQ_MAX_BEARER_TIMEOUT | 24 hours | |
| VQ_MAX_BEARER_CONF | 5 | |
| VQ_MIN_BEARER_CONF | 3 | |
| VQ_DIRECTION_MAX_CONF | 3 | |
| VQ_DIRECTION_TIMEOUT | 24 hours | |
| VQ_RINGDETECT_MAX | 2 | |
| VQ_MAX_RING_LENGTH | 15 seconds | |
| VQ_RING_MAX_CONF | 3 | |
| VQ_RING_DIRECTION_TIMEOUT | 24 hours | |
| VQ_DIRECTION_PERIOD | 60 minutes | |

Procedure for discovery of CIC to Voice Timeslot mapping
This procedure uses the transition from voice idle code (indicating that the voice circuit is not involved in an active call) to any other code set to denote the activation of a voice circuit. A circuit must exhibit a preset minimum number of idle seconds (defined by VQ_MIN_WAIT_TIME) in order to reduce the chance that a non-voice circuit has been selected that contains a valid idle code. The discovery procedure will then camp on the timeslot for up to VQ_MAX_WAIT_TIME seconds, awaiting the start of a call (i.e. a transition from the idle code). Once the call is started the octet stream is checked for a return to idle, denoting the call end. A minimum sequence of idle codes is required at the end of the call to ensure that an idle code sequence is not falsely detected.

In order to make the searching more efficient, only those E1 or T1 bearers currently listed in the Voice Bearer table with full confidence are used. The discovery procedure uses a pointer (VB_E1T1) to the current voice bearer entry in the Voice Bearer Table, and a second pointer (VB_DS0) to the DS-0 position in the E1/T1 bearer.

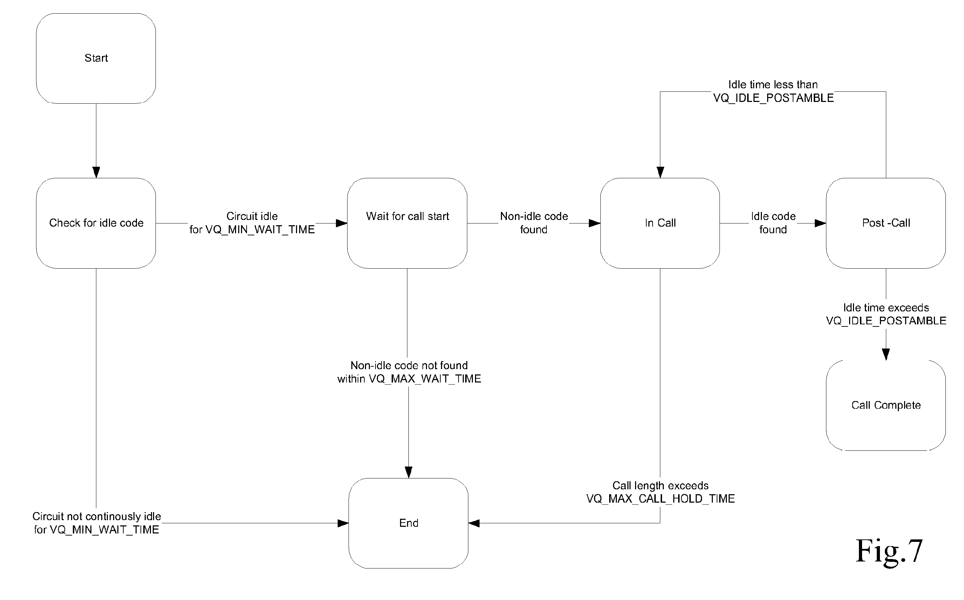

The procedure is described below for the sake of clarity as a single, continuous sequence of steps. An optimal implementation would be as an event-driven process, based on the arrival of voice frames. Each voice frame may change the procedure state if the appropriate condition is met. The state machine for this implementation is shown in Figure 7. Step 1 of the procedure as described below should be called under the control of a timer process, to add new timeslots to the current active batch, limited by some maximum value.
1. If VB_E1T1 is not set (has no value, e.g. on first entry into the procedure) then choose the first entry in the Voice Bearer Table with full confidence and set VB_DS0 to 1.
2. From this bearer allocate VQ_SEARCH_BATCH DS-0s starting at position VB_DS0. If the number of DS-0s on the E1 or T1 is exceeded then move to the next E1 or T1 bearer in the Voice Bearer Table with full confidence. At the point the full batch is allocated record the current DS0 position in VB_DS0. Store the idle code for the bearer in a variable VQ_IDLE_CODE.
3. If the timeslot is continuously idle (using VQ_IDLE_CODE) for VQ_MIN_WAIT_TIME seconds then continue to monitor the timeslot. Otherwise stop transferring data for that timeslot for analysis in this procedure (referred to hereinafter as "disable the timeslot").
4. Continue to monitor the timeslot for up to VQ_MAX_WAIT_TIME seconds. If the timeslot continues to idle, then disable.
5. Note the time of the transition from the idle code to non-idle code. Check the Voice Timeslot (VT) Table for an entry with the current timeslot. If found, then remove it (it must be an old entry). Add a new entry setting VT.TIMESLOT to the current timeslot and VT.VOICE_START_TIME to the time the circuit transitioned from idle code to non-idle.
6. Continue to monitor the timeslot up to VQ_MAX_CALL_HOLD_TIME seconds. If no idle code sequence is observed in this interval then remove the entry from the Voice Timeslot Table and disable the timeslot. Otherwise if an idle code is observed then note this time (as it may be the end of the call) and continue to step 7.
7. Continue to monitor the timeslot for a further VQ_IDLE_POSTAMBLE seconds. If the timeslot does not generate idle codes during this time then assume a transient transition has been observed and return to step 6. Otherwise continue to step 8.
8. Update the value VT.VOICE_END_TIME in the Voice Timeslot Table with the time the call transitioned to idle. There should by now be an entry in the Call Connection Table that potentially matches this voice call, as a result of the Call Connection Processing described below.
9. If VQ_MIN_CALL_HOLD_TIME is set and the duration of the call is less than VQ_MIN_CALL_HOLD_TIME then remove the entry from the Voice Timeslot Table and do no more in respect of this timeslot.
10. Search the Call Connection (CC) Table for entries where the VT.VOICE_START_TIME is within VQ_START_GUARD_TIME of the CC.CONNECT_TIME, VT.VOICE_END_TIME is within VQ_END_GUARD of the CC.CLEAR_TIME and the VT.TIMESLOT.DS0 value is equal to CC.CIC_TIMESLOT.
11. If there are no matches or more than one match then jump to step 16 to tidy up the Voice Timeslot Table.
12. There is exactly one match in the CC Table. This entry is referenced as CC below.
13. Search the CICMultiplex Mapping Table for an entry that matches the global E1 or T 1 number from the VT.TIMESLOT field (that is, mask out the DS0 number from the TIMESLOT field). If an entry is found (referenced as CURRENT in the following description) proceed to step 14, otherwise jump to step 15.
14. If CURRENT.CIC_MULTIPLEX is equal to the CC.CIC_MULTIPLEX then increment CURRENT.CONFIDENCE and set CURRENT.TIMEOUT to VQ_MAX_VOICE_TIMEOUT. Otherwise, decrement CURRENT.CONFIDENCE by 1. If CURRENT.CONFIDENCE is now zero, then remove the entry from the CICMultiplex Mapping Table. Go to step 16.
15. No entry is found: insert a new entry into the CICMultiplex Mapping Table as follows:
   - Set CIC_MULTIPLEX to CC.CIC_MULTIPLEX
   - Set BSC_POINTCODE to CC.BSC_POINTCODE
   - Set E1T1_LINK_NUMBER to the global E1/T1 number taken from VT.TIMESLOT
   - Set CONFIDENCE to 1
   - Set TIMEOUT to VQ_MAX_VOICE_TIMEOUT.
16. Remove entry VT from the Voice Timeslot Table. The entry CC should not be removed from the Call Connection Table just yet in case it needs to be matched with another voice timeslot.
17. Execute the Call Connection Table Timeout procedure described below in order to remove old entries from the Call Connection table.

Call Connection Table Timeout
Entries in the Call Connection Table are not removed when a BSSMAP Clear Command is observed, because the detection of the end of the call on the voice circuit may occur a short time afterwards. This procedure is invoked by a timer process every VQCC_TABLE_SCAN_PERIOD seconds.
1. Scan every entry in the Call Connection Table.
2. If the CLEAR_TIME for an entry is older than the current time by VQ_CC_TABLE_THRESHOLD_TIME then remove that entry from the table.

CICMultiplex Mapping Table Timeout
This procedure decrements the timeout field in the CICMultiplex Mapping Table and removes entries when the timeout reaches zero. This procedure should be called every VQ_TABLE_SCAN_PERIOD seconds.
1. Scan every entry in the CICMultiplex Mapping Table
2. Decrement TIMEOUT for each entry.
3. If TIMEOUT equals zero then remove the entry from the table.
4. Scan every entry in the Voice Bearer Table.
5. Decrement TIMEOUT for each entry.
6. If TIMEOUT equals zero then remove the entry from the Voice Bearer Table.

Voice Bearer Discovery
The purpose of this procedure is to identify which subset of the E1 and T1 bearers monitored by a probe is carrying A-interface voice traffic. This is done by scanning these links looking for idle codes in their DS-0 timeslots. Some DS-0 timeslots will be active and will not generate idle codes at this time (except perhaps during conversation pauses), so a threshold is used to set a minimum number of DS-0s that must have idle codes present for the link to be treated as carrying voice traffic.

This procedure should be invoked every VQ_VOICE_DISCOVERY_PERIOD seconds, to search all the cards in a server in parallel, and within each card in bearer order and monitor the next E 1 or T 1 each time the procedure is invoked.
1. Select the next E1 or T1 on the card to be searched.
2. For the selected E1/T1, enable (receive data from) the first VQ_BEARER_DS0_COUNT DS-0 timeslots, starting at position 1. Collect all the traffic from these timeslots for a period of 1 second.
3. For the collected data, count the total amount of octets that equal E1 idle code 0x54 and store this in E1IDLECOUNT. Count the total number of octets that equal T1 idle code 0x7F and store this in T1IDLECOUNT.
4. If E1IDLECOUNT/8000 or T1IDLECOUNT/8000 is greater than VQ_BEARER_IDLE_SECONDS then record the largest idle code and proceed to the next step. If both values exceed the threshold or fail to meet the threshold then proceed to the next E1 or T1 bearer. Note that a failure to match here does not cause the confidence to decrement. The timeout mechanism is used to deal with changed or reassigned bearers.
5. Using the E1 or T1 identifier from step 1, search the Voice Bearer Table for an entry matching E1T1_LINK_NUMBER. If an entry is found (referred to below as VB) continue to step 7. If no entry is found then create an entry as follows:

| | |
|---|---|
| E1T1_LINK_NUMBER | = E 1 or T 1 number from step 1 |
| IDLECODE | = Idle code value that exceeded threshold in step 4 |
| CONFIDENCE | = 1 |
| TIMEOUT | = VQ_MAX_BEARER_TIMEOUT |

6. Continue with next E1 or T1 bearer in step 1.
7. Increment VB.CONFIDENCE if it is less than VQ_MAX_BEARER_CONF. Set VB.TIMEOUT to VQ_MAX_BEARER_TIMEOUT.
8. End.

Call Connection Following
SCCP Connections need to be followed in order to generate the entries the Call Connection Table. The procedure below is invoked in response to receipt of the identified signalling messages involving SCCP:

SCCP Connection Request containing a BSSMAP (GSM) or a BSMAP (CDMA) Complete Layer 3 Information
This message is sent from the BSC to the MSC at the start of call procedures other than handovers.
1. Discard the message if it does not contain a CM Service Request or a Paging Response since only voice calls are relevant to this procedure.
2. Check there is no existing entry in the Call Connection Table with the MSC_PC, BSC_PC and BSC_LOCALREF equal to the Destination Point Code, Originating Point Code and Source Local Reference from the message. If there is then remove the existing entry as it implies a Connection Clear has been missed.
3. Insert a new entry in the Call Connection Table as follows (referred to hereinafter as CURRENT):
   Set BSC_PC to the Originating Point Code in the message
   Set MSC_PC to the Destination Point Code in the message
   Set BSC_LOCALREF to the Source Local Reference in the message
   Set MSC_LOCALREF to 0xFFFFFFFF
   Set CIC_MULTIPEX to 0xFFFF
4. Check to see if there is a CIC present in the message (this is a CDMA message). If present, set CURRENT.CIC_MULTIPLEX to the multiplex part of the CIC and CURRENT.CIC_TIMESLOT to the timeslot part of the CIC.
5. End.

SCCP Connection Request containing a BSSMAP Handover Request or a BSMAP Handoff Request
This message is sent by the MSC. The BSSMAP Handover Request may contain a CIC that needs to be extracted.
1. Check there is no existing entry in the Call Connection Table with MSC_PC, BSC_PC and MSC_LOCALREF equal to the Originating Point Code, the Destination Point Code and Source Local Reference from the message. If there is an existing entry then remove it as it implies a Connection Clear has been missed.
2. Insert a new entry (referred to below as CC) into the Call Connection Table as follows:
   Set BSC_PC equal to the Destination Point Code in the message
   Set MSC_PC equal to the Originating Point Code in the message
   Set MSC_LOCALREF to the Source Local Reference in the message
   Set BSC_LOCALREF to 0xFFFFFFFF
   Set CIC_MULTIPLEX to 0xFFFF
3. If there is a CIC present in the message then set CC.CONNECT_TIME to the message timestamp; set CC.CIC_MULTIPLEX to the multiplex part of the CIC and CC.CIC_TIMESLOT to the timeslot part of the CIC.

SCCP Connection Confirm
This is sent by the MSC in response to an SCCP Connection Request. It may contain a BSSMAP (GSM) or BSMAP (CDMA) payload that is ignored. However, if the payload is a BSSMAP Handover Request Acknowledge or a BSMAP Handoff Request Acknowledge then the procedure in the next following section should be followed.
1. Check there is no existing entry in the Call Connection Table with MSC_PC, BSC_PC and MSC_LOCALREF equal to the Originating Point Code, Destination Point Code and Source Local Reference from the message. If there is an existing entry then remove it as it implies a Connection Clear has been missed.
2. Find the entry in the Call Connection table with MSC_PC, BSC_PC and BSC_LOCALREF equal to the Originating Point Code, Destination Point Code and Destination Local Reference from the message. If not found then do no more for this instance of this procedure (otherwise this entry is referred to below as CC).
3. Verify that CC.MSC_LOCALREF is equal to 0xFFFFFFFF. If not, generate an error alert and remove the entry.
4. Set CC.MSC_LOCALREF to the Source Local Reference from the message

SCCP Connection Confirm containing a BSSMAP Handover Request Acknowledge or a BSMAP Handoff Request Acknowledge
The BSC sends this message to the MSC in response to an SCCP Connection Request containing a BSSMAP Handover Request or BSMAP Handoff Request.
1. Check there is no existing entry in the Call Connection Table with BSC_PC, MSC_PC and BSC_LOCALREF equal to the Originating Point Code, Destination Point Code and Source Local Reference in the message.
2. Find the entry in the Call Connection table with MSC_PC, BSC_PC and MSC_LOCALREF equal to the Destination Point Code, Originating Point Code and Destination Local Reference from the message. Do nothing if not found, otherwise continue (this entry is referred to below as CC).
3. Verify that CC.BSC_LOCALREF is equal to 0xFFFFFFFF. If not, generate an error alert and remove the entry.
4. Set CC.BSC_LOCALREF to the Source Local Reference from the message.
5. If the message contains a CIC, set CC.CONNECT_TIME to the timestamp of the message; set CC.CIC_MULTIPLEX to the multiplex part of the CIC; set CC.CIC_TIMESLOT to the timeslot part of the CIC.

BSSMAP or BSMAP Assignment Request
The MSC sends this message to request the BSC to allocate radio resources for the call. It may contain a CIC allocated by the MSC.
1. Find the entry in the Call Connection table with BSC_PC, MSC_PC and BSC_LOCALREF equal to Destination Point Code, Originating Point Code and Destination Local Reference from the message. Do no more for this instance of this procedure if not found, otherwise continue (this entry is referred to below as CC).
2. If the message contains a CIC, set CC.CIC_MULTIPLEX to the multiplex part of the CIC; set CC.CIC_TIMESLOT to the timeslot part of the CIC.
3. Using the E1/T1 part of the timeslot identifier from the message, call the procedure described below for determining bearer direction from signalling ("Signalling Message Indicating Direction"), passing the E1/T1 number and TO_MS as the direction indicator.

BSSMAP or BSMAP Assignment Complete
This message is sent by the BSC to the MSC in response to an Assignment Request. It may contain a CIC allocated by the BSC.
1. Find the entry in the Call Connection table with BSC_PC, MSC_PC and MSC_LOCALREF equal to the Originating Point Code, Destination Point Code and Destination Local Reference from the message. Do no more for this instance of this procedure if not found, otherwise continue (this entry is referred to below as CC).
2. If the message contains a CIC, set CC.CIC_MULTIPLEX to the multiplex part of the CIC; set CC.CIC_TIMESLOT to the timeslot part of the CIC.
3. Using the E1/T1 part of the timeslot identifier from the message, call the procedure described below for determining bearer direction from signalling ("Signalling Message Indicating Direction"), passing the E1/T1 number and FROM_MS as the direction indicator.
4. If the message is a CDMA BSMAP Assignment Complete then set CC.CONNECT_TIME to the timestamp from the message.

BSSMAP or BSMAP Clear Command
Sent by the MSC to the BSC to release allocated resources. The connection CLEAR_TIME is only set if it has not already been set by a DTAP Disconnect (see the section below on "DTAP Disconnect"). In CDMA, the CLEAR_TIME will always be set by the Clear Command.
1. Find the entry in the Call Connection table with BSC_PC, MSC_PC and BSC_LOCALREF equal to the Destination Point Code, Originating Point Code and Destination Local Reference from the message. Do no more for this instance of this procedure if not found, otherwise continue (this entry is referred to below as CC).
2. Set CC.CLEAR_TIME to the timestamp from message only if CC.CLEAR_TIME is not set. This implies that the DTAP Disconnect Message has been missed or that the SCCP Connection has been handed to another BSC. Do not remove the entry from the Call Connection Table just yet as the detection of the call ending on the voice timeslot may not be complete. If CC.CIC_MUL TIPLEX is equal to 0xFFFF then remove the entry (it was not a voice call). Otherwise, leave the entry to be removed using the procedure "Call Connection Table Timeout" described above.

DTAP Connect Acknowledge or BSMAP Connect on a SCCP DT1
In GSM the DTAP Connect Acknowledge can be sent by either the MS or the network and in effect provides acknowledgement that the user or the network has accepted the call. Note that the message timestamp is used to set the call CONNECT_TIME which is then used to match the START_TIME on the voice circuit as denoted by the transition from idle mode. For mobile originated calls this time is after the ringing period and so is likely to be an inaccurate measure of when the downlink timeslot transitions from idle. However, the assumption is that it should be a good match for the uplink timeslot start time and for the mobile terminated case.

In CDMA, the Connect message is only sent for the mobile terminated case. When observed it is used to overwrite the call CONNECT_TIME set by a BSMAP Assignment Complete, to give a more accurate indication of the start of activity on the voice circuit.
1. Find the entry in the Call Connection table with BSC_PC, MSC_PC and MSC_LOCALREF equal to the Originating Point Code, Destination Point Code and Destination Local Reference from the message. If found (referring to this entry as CC) set CC.CONNECT_TIME equal to the time of the current message. Do no more for this instance of this procedure. If no entry is found, execute step 2.
2. Find the entry in the Call Connection table with BSC_PC, MSC_PC and BSC_LOCALREF equal to the Destination Point Code, Originating Point Code and Destination Local Reference from the message. If found (referring to this entry as CC) set CC.CONNECT_TIME equal to the time of the current message. Do no more for this instance of this procedure.

DTAP Disconnect
This message can be sent by the MS or the network to denote the fact that one party has hung up the call.
1. Find the entry in the Call Connection table with BSC_PC, MSC_PC and MSC_LOCALREF equal to the Originating Point Code, Destination Point Code and Destination Local Reference from the message. If found (referring to this entry as CC) set CC.CLEAR_TIME equal to the time of the current message. Do no more for this instance of this procedure. If no entry is found, execute step 2.
2. Find the entry in the Call Connection table with BSC_PC, MSC_PC and BSC_LOCALREF equal to the Destination Point Code, Originating Point Code and Destination Local Reference from the message. If found (referring to this entry as CC) set CC.CLEAR_TIME equal to the time of the current message. Do no more for this instance of this procedure.

Using the CICMultiplex Mapping Table to Discover the Voice Timeslot in Use When the CIC to timeslot correlation is required for a specific call, the CIC is extracted from the signalling and is used to search the CICMultiplex Mapping Table. Ideally this search will return exactly two entries, corresponding to the two voice channels used in the call. If three or more entries are returned it is assumed that the discovery mechanism is in an unstable state and the confidence field is decremented for each link.

If the search returns one or two entries then the direction of each bearer needs to be determined. This is obtained from the procedure described below ("E1/T1 Direction Request"). If both directions are the same, then this is an error. If only a single direction is returned and the other is unknown then it is assumed that the unknown bearer has the opposite direction to the direction that is returned.

Note that the procedure will still return bearer information even if the direction is unknown. The procedure is:
1. Search the CICMultiplex Mapping Table for all entries matching the CIC_MULTIPLEX and BSC_POINTCODE from the call and where CONFIDENCE is greater than VQ_MIN_BEARER_CONF.
2. If the search returns no entries then do no more for this instance of this procedure.
3. If the search returns one entry (referred to herein as MUX1), find the direction for MUX1.E1T1_LINK_NUMBER by calling the E1/T1 Direction Request procedure described below. Return the direction and MUX1.E1T1_LINK_NUMBER to the calling context. Do no more for this instance of this procedure.
4. If the search returns two entries (referred to herein as MUX1 and MUX2), obtain respective directions DIR1 and DIR2 for each one using the E1/T1 Direction Request procedure. If DIR1 and DIR2 are the same then generate an error alert and return the E1/T1 information, DIR1 and DIR2 to the calling context. Otherwise, if either DIR1 or DIR2 is UNKNOWN, then set the UNKNOWN direction to the opposite of the known direction. For this condition and where the directions are different then return the E1/T1 information and DIR1 and DIR2 to the calling context. Do no more for this instance of this procedure.
5. If the search returns three or more entries it implies that a link has been re-homed or that the learning process is in an unstable state. In this case decrement the CONFIDENCE value for all returned entries and do no more for this instance of this procedure.

Bearer Direction Discovery
It is useful to be able to determine the direction of the two voice bearers that are used for each call, so that the mobile station can be correctly identified. If the direction is chosen arbitrarily there is a chance the bearers may be swapped after handovers that cause a new A-interface circuit to be used. Three techniques are described below for discovering bearer direction. These are: use of signalling information; manual configuration; and ring-tone detection on the downlink towards the mobile station.

Direction Determination from Signalling
Some A-interface links allocate a timeslot to carry signalling traffic between the MSC and BSC (for example, there may be 12 A-interface links carrying signalling out of a total of 80 links). By using signalling messages that only travel in one direction it is possible to work out which way the bearer goes. On the downlink the BSSMAP Assignment Request is used (see step 3 of BSSMAP or BSMAP Assignment Request above) and on the uplink BSSMAP Assignment Complete is used (see step 3 of BSSMAP or BSMAP Assignment Complete above).

This procedure is called when a BSSMAP Assignment Request or Assignment Complete on GSM or CDMA message is observed, to set the correct direction in the Discovered Direction Table. The E1/T1 link number and direction are passed as parameters to this procedure.
1. Using the E1/T1 link number passed as a parameter, search the Discovered Direction Table. If an entry (referred to herein as SD) is found, proceed to step 2. Otherwise go to step 3.
2. Verify that SD.DIRECTION equals the direction value passed to this procedure. If they are different generate an error alert. Set SD.DIRECTION to the direction given, set SD.CONFIDENCE to VQ_DIRECTION_MAX_CONF and set SD.TIMEOUT to VQ_DIRECTION_TIMEOUT. Do no more in this instance of the procedure.
3. Create a new entry for the Discovered Direction Table as follows:

| | |
|---|---|
| E1T1_LINK_NUMBER | = E1/T1 number passed as a parameter |
| DIRECTION | = One of TO_MS or FROM_MS as indicated |
| CONFIDENCE | = VQ_DIRECTION_MAX_CONF |
| TIMEOUT | = VQ_DIRECTION_TIMEOUT. |

4. End.

Direction Hints from Configuration Information
Depending on the monitoring configuration it could be the case, for example, that all the E 1 links within one optical bearer (e.g. STM1) go in the same direction. This would be the case where optical splitters are used on the links between the BSC and MSC. In this case it is possible to provide a configuration hint indicating this information. The scheme defined below also allows individual E1 or T1 bearers to be assigned their own direction.

Within a probe, the following table shows the components of an E1/T1 identifier:

| | |
|---|---|
| Card | A probe can contain up to six interface cards |
| Bearer | Each card receives two DS-3 or two optical bearers. All the E1/T1s within a bearer could be in the same direction, particularly in the case where splitters are used. |
| E1T1 Link | Any signalling found on an E1/T1 link indicates direction of all timeslots on that E1/T1 link. This can occur if a multiplex (DS-3 or optical) is used. |

Hints can be provided at two levels: First of all it is possible to indicate that all the E1/T1s on a card's bearer are going in the same direction and optionally indicate which direction. Where the E1/T1s within a bearer go in different directions, then direction hints can be provided for individual E1/T1s or contiguous ranges of E1/T1s.

Bearer Direction Hints
Bearer direction hints are a configurable resource (e.g. stored in an ASCII configuration file) of the form:
<card>,<bearer>[,<hint>]
where:

| | |
|---|---|
| <card> | Range 0..5 |
| <bearer> | 0 or 1 |
| <hint> | One of TO_MS, FROM_MS, UNKNOWN. Default is UNKNOWN. |

Bearer direction hints need only be provided for a subset of the bearers. This resource populates the Bearer Hints table.

E1/T1 Direction Hints
For providing information on the direction of individual E1/T1s or contiguous groups, the resource takes the form:
<card>,<bearer>,<E1T1Min>,<E1T1Max>[,<hint>]
where:

| | |
|---|---|
| <card> | Range 0..5 |
| <bearer> | 0 or 1 |
| <E 1T1Min> | Start of E1/T1 contiguous range |
| <E1T1Max> | End of contiguous range. ForsingleE1/T1 value set to E1T1Min |
| <hint> | As for Bearer direction hints above |

The E1T1 direction hints need only be provided for a subset of the E1s and T1. This resource populates the E1/T1 Hints table.

Ring Detection
When a phone call is made, the remote MSC or PSTN switch will play a ringing tone to the calling party. This tone will appear on one of the voice timeslots associated with the call. The other timeslot will contain background noise or speech from the calling party. The detection procedure must differentiate between a ringing tone and background noise or speech.

On the A-interface, the ringing tone is assumed to be only present on the downlink for mobile-originated calls. For the case of mobile-terminated calls, the local MSC is assumed to generate the ringing tones back to the caller and so will not be observed (i.e. heard) on the downlink.

In terms of signalling for a mobile originated call, the start of ringing should coincide (roughly) with the network sending a DTAP Alerting message to the MS. The ringing period will stop when the remote user answers and this is signalled by a DTAP Connect message from the network to the MS. The MS responds with a DTAP Connect Ack (see Figure 2). This messaging can be used to limit the time window over which the ring detection procedure is applied.

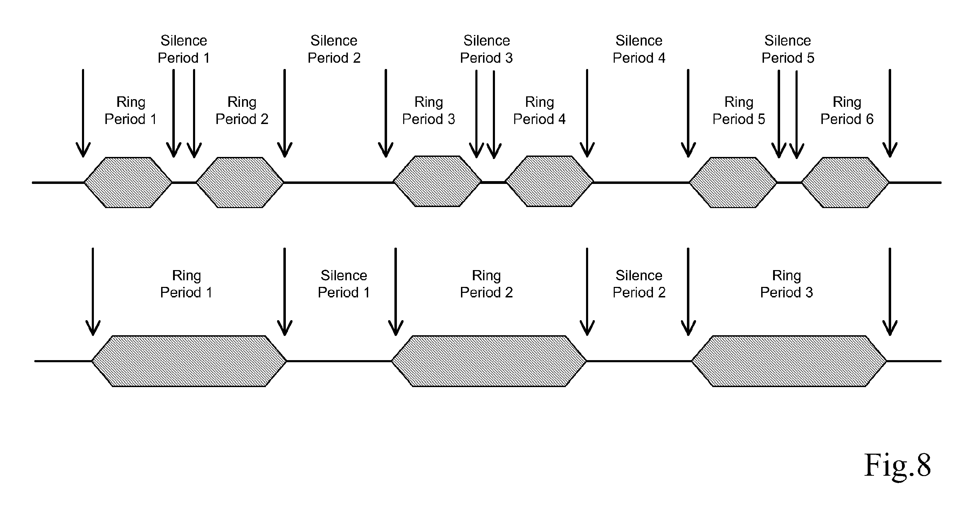

Although there are many different ring tones in use, they all have a common feature, that is, they consist of a burst of noise followed by a period of silence. Figure 8 shows two ring tones: a ring-ring and a single ring.

The procedure measures the duration of each ring burst, and compares it with the others. Ring period 1 should match ring periods 2 and 3. However it is preferable to avoid ring period 1 in case it is incomplete. Similarly silence period 2 should match silence period 4, on both ring types. Alternatively, silence periods 1, 3 and 5 could be compared to determine ring type.

When a ringing tone is detected, the direction confidence is increased for the E1/T1 bearer carrying the tone.

The example procedure given below (expressed in the C programming language) performs the detection of ringing and silence periods. The procedure can be modified if desired so that it can run as part of the voice discovery procedure.

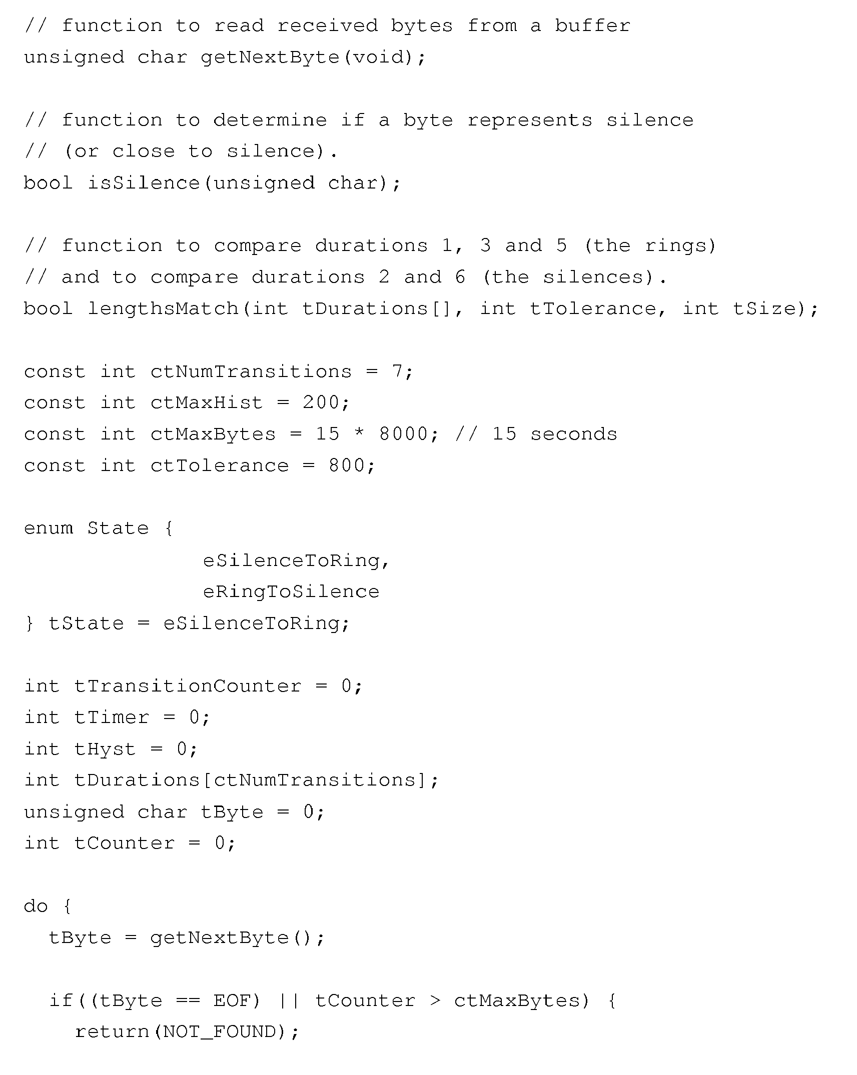

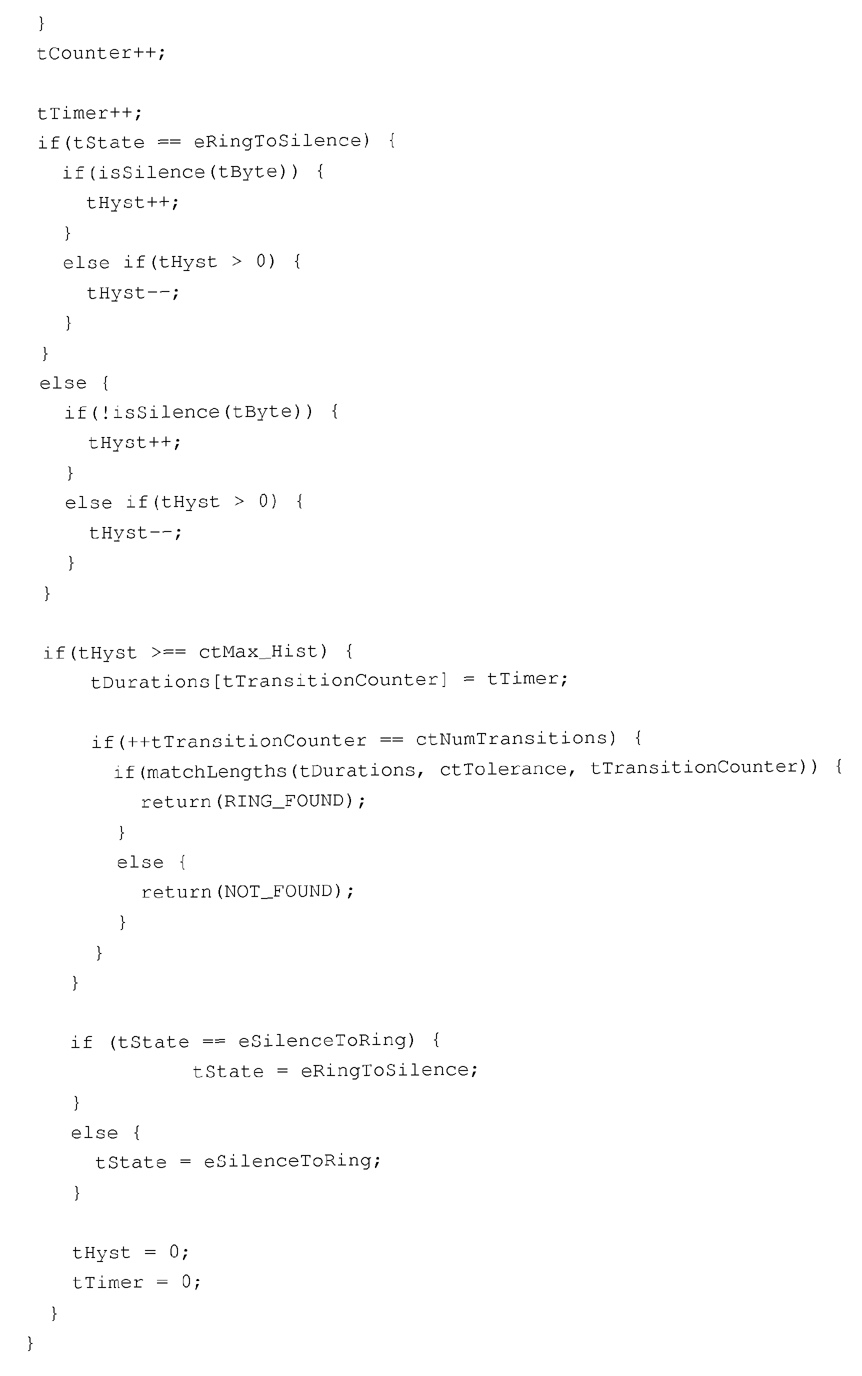

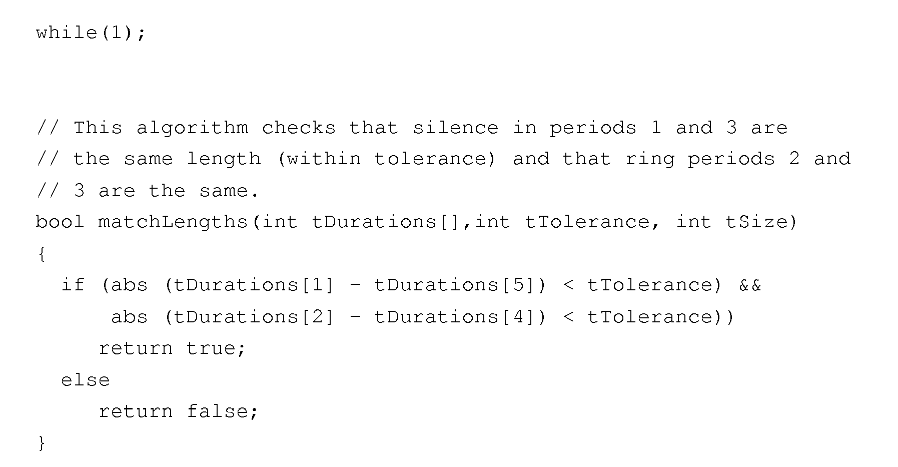

### DTAP Alerting or BSMAP Assignment Complete

The purpose of this procedure is to trigger the capture of raw data from a timeslot at the point a downlink GSM DTAP Alerting or CDMA BSMAP Assignment Complete message is observed. The raw stream is processed for ring tones until either a DTAP Connect Ack is observed (the remote party has answered) or the detection procedure has collected the maximum number of bytes it needs (currently 15 seconds' worth). At this point the ring detection procedure given above is applied.

The procedure checks the Call Connection table for the SCCP connection and then looks up the CIC-to-bearer mapping. One or both of the voice bearers are then searched for ring tones. This approach means that ring tone detection only takes place on bearers that are known to be associated with a BSSMAP CIC.

In order to limit the processing required for this procedure the number of calls to which ring detection is applied may be limited to some configurable value (e.g. to one call in the first instance, using VQ_RINGDETECT_MAX).

For the GSM case the raw collection for ring tone detection is terminated when either the maximum number of octets is captured or a DTAP Connect Ack is seen. For the CDMA case the raw collection is terminated when the maximum number of octets is captured.

The procedure is as follows:
1. If the number of calls in the Active Ring Call Table is greater than or equal to VQ_RINGDETECT_MAX then do no more in this instance of the procedure: the maximum number of ring detection calls is active. Otherwise proceed to the next step.
2. Look up the entry in the Call Connection Table with the BSC_PC, MSC_PC and BSC_LOCALREF equal to the destination point code, the originating point code and the destination local reference from the message. If no entry is found, do no more in this instance of the procedure. If an entry (herein referred to as CC) is found, proceed to the next step.
3. If CC.CIC_MULTIPLEX != -1, then find the voice timeslots associated with this call. There may be zero, one or two such bearers in the CICMultiplex Mapping Table. Search the CICMultiplex Mapping Table using the destination point code from the message and CC.CIC_MULTIPLEX. If no entries are found then do no more in this instance of the procedure. (The found entries from the CICMultiplex Mapping Table are referred to below as MUX1 and MUX2.)
4. Create a new entry in the Active Ring Call Table as follows:

| | |
|---|---|
| BSC_PC | = CC.BSC_PC |
| MSC_PC | = CC.MSC_PC |
| BSC_LOCALREF | = CC.BSC_LOCALREF |
| MSC_LOCALRE | = CC.MSC_LOCALREF |
| TIMESLOT1 | =MUX1.E1T1_LINK_NUMBER\|CC.CIC_TIMESLOT |
| TIMESLOT2 | =MUX2.E1T1 LINK_NUMBER\|CC.CIC_TIMESLOT, if MUX2 is set. |

5. Enable new timeslots TIMESLOT1 and TIMESLOT2 (if set) in raw mode.
6. End

Receipt of raw frame
This procedure applies the ring detection procedure given above to a buffer of VQ_MAX_RING_LENGTH seconds of accumulated data. Note that when a timeout or a ring is detected on either timeslot both are disabled to simplify the overall processing.
1. Search the Active Ring Call Table on field TIMESLOT using the timeslot from the message. If not found, search the table on field TIMESLOT2. If no entry is found then do no more in this instance of the procedure. Otherwise proceed to the next step noting which timeslot of the two is currently in use (the identified table entry is referred to below as ACTIVE).
2. Store the raw frame in ACTIVE.BUFFER1 or ACTIVE.BUFFER2 as appropriate.
3. Now check to see if the maximum time has been exceeded. If the length of the buffer used divided by 8000 (to convert to seconds) exceeds VQ_MAX_RING_LENGTH, then jump to step 4. Otherwise do no more in this instance of the procedure.
4. Apply the ring detection procedure given above, passing the appropriate buffer (ACTIVE.BUFFER1 or ACTIVE.BUFFER2 depending on the timeslot).
5. If the ring detection procedure returns NOT_FOUND, then disable the raw mode timeslots ACTIVE.TIMESLOT1 and ACTIVE.TIMESLOT2 if set. Remove entry ACTIVE from the Active Ring Call Table.
6. If the ring detection procedure returns RING_FOUND, then using the E1/T1 link number from the ACTIVE.TIMESLOT1 or ACTIVE.TIMESLOT2 (i.e. remove the DS-0 component) search the Discovered Direction Table for an entry (referred to below as DD). If no entry is found, go to step 9.
7. If DD.DIRECTION is equal to FROM_MS then decrement DD.CONFIDENCE. If DD.CONFIDENCE is equal to zero then generate an error alert, remove the entry from the table and go to step 10.
8. Increment DD.CONFIDENCE if it has not yet reached its maximum value (VQ_RING_MAX_CONF). Set DD.TIMEOUT to VQ_DIRECTION_TIMEOUT. Go to step 10.
9. If no entry is found in the Discovered Direction Table then create a new entry as follows:

| | |
|---|---|
| E1T1_LINK_NUMBER | = E1/T1 number from the message (remove DS-0 component) |
| DIRECTION | = TO_MS |
| CONFIDENCE | = 1 |
| TIMEOUT | = VQ_RING_DIRECTION_TIMEOUT |

10. Disable the timeslots TIMESLOT1 and TIMESLOT2 if set. Remove entry ACTIVE from the Active Ring Call Table.
11. End.

DTAP Connect Ack
This message signals the end of the ringing period and start of the voice portion of the call. As part of the ring detection procedure this message is used to disable any active raw timeslots and to remove the SCCP connection entry from the Active Ring Call Table.
1. Search the Active Ring Call Table for the entry where the BSC_PC, MSC_PC and MSC_LOCALREF are equal to the originating point code, destination point code and destination local reference from the message. Do no more in this instance of the procedure if no entry is found. Otherwise continue to step 2 (the entry found it referred to below as ACTIVE).
2. Now apply the ring detection procedure. Go to step 4 in the procedure above for "Receipt of raw frame", passing across the information associated with ACTIVE.
3. Now disable the one or two raw timeslots associated with this entry. Turn off raw mode timeslots ACTIVE.TIMESLOT1 and ACTIVE.TIMESLOT2 if present.
4. Remove entry ACTIVE.
5. End.

E1/T1 Direction Request
The direction of a bearer can be derived from a combination of the Discovered Direction table, the Bearer Hints table and the E1T1 Hints table. If there are entries in either hints table it is useful to be able to validate them against directions discovered by signalling or downlink ring detection. In addition, the hints tables are allowed to specify the direction as unknown and in this case the hints table only indicates that a group of E1/T1s or bearers all contain traffic in the same direction.

This procedure first checks the Direction table (a cache of known directions). If that fails, the E1T1 Hints table is searched and the result compared against the Discovered Direction table. Where there is a consistent match then that direction is used. If no entry matches in the Discovered Direction table, the entry from the hints table is used (including the case where the hint is direction UNKNOWN). If the E1T1Hints table does not match then the Bearer hints are then searched in the same way.

This procedure is passed an E1/T1 link identifier and returns a direction of one of TO_MS, FROM_MS or UNKNOWN.
1. Strip off the DS-0 component of the E1/T1 link identifier if present. Search the Direction Table for an entry matching E 1 T I_LINK_NUMBER. If found, return the DIRECTION field from that entry and do no more in this instance of the procedure. Otherwise proceed to the next step.
2. Now search the E1T1 Hints Table for an entry matching the CARD and BEARER number and where the E1/T1 number is greater than or equal to E1T1_NUMBER_MIN and is less than or equal to E1T1_NUMBER_MAX. If not found proceed to step 6. (A found entry is referred to below as E1T1HINT.)
3. Now search the Discovered Direction Table. The purpose of this is to use the entry/entries to provide a direction if the hints table is set to UNKNOWN or to validate the manually configured direction. Scan the Discovered Direction Table and select all the entries (there may be more than one) where the E1T1_LINK_NUMBER is greater than or equal to E1T1HINT.E1T1_NUMBER_MIN and less than or equal to E1T1HINT.E1T1_NUMBER_MAX, and each entry has full CONFIDENCE. If no entry is found then proceed to step 5 below. If more than one entry is found verify that all the entries have the same value in their DIRECTION field. If not, then generate an error alert and return UNKNOWN. Otherwise choose a single entry from the Discovered Direction Table result set (referred to below as SD).
4. If E1T1HINT.DIRECTION is equal to TO_MS or FROM_MS then verify that the SD.DIRECTION matches that of E1T1HINT.DIRECTION. If it does not match generate an error alert and do no more in this instance of the procedure. Otherwise (including the case where E1T1HINT.DIRECTION is UNKNOWN) create a new entry in the Direction Table using the value passed for the E1/T1 number, SD.DIRECTION and set TIMEOUT to VQ_DIRECTION_TIMEOUT. Return SD.DIRECTION to the caller and do no more in this instance of the procedure.
5. At this point there is a matching E1/T1 hint but no match against the discovered direction table. If the hint indicates a mobile direction then use it directly. If E1T1HINT.DIRECTION is equal to TO_MS or FROM_MS then create anew entry in the Direction Table (as described in step 4) and return that direction to the caller. Otherwise return UNKNOWN and do no more in this instance of the procedure.
6. If this step is reached there is no matching entry in the E1T1 Hints table. The procedure is repeated using the Bearer Hints table. Search the Bearer Hints Table for an entry matching CARD and BEARER from the E 1/T1 identifier. If no entry is found proceed to step 10. (A found entry is referred to below as BEARERHINT.)
7. Now search the Discovered Direction Table for one or more entries on this bearer. Scan the Discovered Direction Table and select all entries for the card and bearer component of the E1T1_LINK_NUMBER matching BEARERHINT.CARD and BEARERHINT.BEARER and having full CONFIDENCE. If no entry is found proceed to step 9. If more than one entry is found then check that all entries have the same value in their DIRECTION field. If not, then generate an error alert and return UNKNOWN. Otherwise choose a single entry from the Discovered Direction Table set (referred to below as SD).
8. If BEARERHINT.DIRECTION is equal to TO_MS or FROM_MS then verify that SD.DIRECTION matches BEARERHINT.DIRECTION. If it does not match then generate an error alert and do no more in this instance of the procedure. Otherwise (including the case where BEARERHINT.DIRECTION is UNKNOWN) create anew entry in the Direction Table using the value passed for the E1/T1 number, SD.DIRECTION and set TIMEOUT to VQ_DIRECTION_TIMEOUT. Return SD.DIRECTION to the caller and do no more in this instance of the procedure.
9. At this point there is a bearer hint but no match against the discovered direction table. In this case the direction from the bearer hints table is used if it is either TO_MS or FROM_MS. If BEARERHINT.DIRECTION is equal to FROM_MS or TO_MS then create a new entry in the Direction Table (as described in step 4) and return that direction to the caller. Otherwise return UNKNOWN.
10. If this step is reached then both hints tables are either empty or do not cover the E1/T1 bearer passed to this procedure. The steps above are designed to make sure that the hints are consistent with the discovered information. Now do a direct look up on the discovery information to check if there is a match. Search the Discovered Direction table for an entry where the E1T1_LINK_NUMBER matches that passed to this procedure and the entry has CONFIDENCE at full value. If there is a match then create an entry in the Direction Table using the E1/T1 link number, DIRECTION from the Discovered Direction table and setting TIMEOUT to VQ_DIRECTION_TIMEOUT. Return the DIRECTION for the new entry. Otherwise if no matching entry is found in the Discovered Direction table then return UNKNOWN.
11. End.

Direction Tables Timeout Processing
As the Direction Table is operating as a cache in order to avoid repetition of the E1/T1 Direction Request processing described above, this procedure is used to timeout entries so that they are reconstituted. The Discovered Direction Table is also subject to a time out mechanism but in the case of ring tone discovery and direction from the signalling the time out value is refreshed when a consistent direction is discovered.

This procedure should be executed when the timer set using VQ_DIRECTION_PERIOD expires.
1. Scan the Direction table and decrement the TIMEOUT field by 1 for each entry. If TIMEOUT is equal to zero then remove the entry.
2. Scan the Discovered Direction table and decrement the TIMEOUT field by 1 for each entry. If TIMEOUT is equal to zero then remove the entry.

Although the invention has been described for the sake of convenience in the context of monitoring of A links in a 2G GSM or CDMA communications network, it can also be implemented, with appropriate modifications, by monitoring A-bis links in a GSM network, or by monitoring Iu-CS links in a UMTS (3G) network.

## Claims

1. A method of correlating circuit identifications of a signalling circuit and a bearer circuit in a mobile communications network, comprising the steps of:
monitoring a signalling link and detecting signalling messages relating to communications carried on a bearer circuit;
monitoring a bearer circuit and detecting bearer timeslots containing communications traffic;
identifying occurrence of a predetermined pattern in communications traffic on the bearer circuit, and extracting the bearer circuit identification for traffic exhibiting that pattern;
identifying signalling messages by reference to information contained in the messages relating to time of occurrence of related communications traffic on the bearer circuit, and extracting the signalling circuit identification contained in the identified messages; and
correlating the extracted signalling circuit and bearer circuit identifications.

2. The method of claim 1, wherein the predetermined pattern comprises alternation between codes indicating an idle and a non-idle bearer circuit.

3. The method of claim 1 or claim 2, wherein the information relating to time of occurrence comprises information regarding start and end times of communications traffic.

4. The method of any one of the preceding claims, wherein the mobile communications network is a GSM or 2G-CDMA network, and the signalling link monitored is an A link.

5. The method of any one of claims 1 to 3, wherein the mobile communications network is a GSM or 2G-CDMA network, and the signalling link monitored is an A-bis link.

6. The method of any one of claims 1 to 3, wherein the mobile communications network is a UMTS network, and the signalling link monitored is an Iu-CS link.

7. The method of any one of the preceding claims, wherein the signalling circuit identification comprises a CIC multiplex code.

8. The method of any one of the preceding claims, wherein the bearer circuit identification comprises an E1 or T1 link number.

9. Apparatus for correlating circuit identifications of a signalling circuit and a bearer circuit in a mobile communications network, comprising:
a monitor for monitoring a signalling link and detecting signalling messages relating to communications carried on a bearer circuit, and for monitoring a bearer circuit and detecting bearer timeslots containing communications traffic;
an identifier for identifying occurrence of a predetermined pattern in communications traffic on the bearer circuit, and extracting the bearer circuit identification for traffic exhibiting that pattern, and for identifying signalling messages by reference to information contained in the messages relating to time of occurrence of related communications traffic on the bearer circuit, and extracting the signalling circuit identification contained in the identified messages; and
a correlator for correlating the extracted signalling circuit and bearer circuit identifications.

10. A method of discovering direction of communications traffic on a bearer circuit, comprising detecting signalling messages relating to the communications traffic and deducing the direction of the communications traffic by analysis of the signalling messages.

11. The method of claim 10, wherein the signalling messages are any of BSSMAP Assignment Request, BSSMAP Assignment Complete, BSMAP Assignment Request and BSMAP Assignment Complete messages.

12. A method of discovering direction of communications traffic on a bearer circuit, comprising detecting and analysing communications signals on the bearer circuit that are indicative of occurrence of ringing signals.

13. The method of claim 12, wherein a ringing signal is detected by monitoring for a signal pattern comprising a burst of noise followed by a period of silence.
